# DEMANDE DE BREVET EUROPEEN

(11) **EP 1 338 567 A2**
(43) Date de publication de la demande: **27.08.2003**
(21) Numéro de dépôt: 03002924.3
(22) Date de dépôt: 10.02.2003
(51) Int. Cl.: C02F 1/461

(54) **Procédé et appareil d'épuration d'eau polluée par de l'huile, et notamment par des hydrocarbures, en émulsion**

(30) Priorité: 11.02.2002 CH 2232002
(71) Demandeur: VUILLIOMENET, Alain, 2400 Le Locle (CH)
(72) Inventeur: Guillod, Oliver, 25500 Morteau (FR)
(74) Mandataire: North, Mathieu

(57) **Abrégé**

Ce procédé d'épuration d'eau polluée par de l'huile, et notamment par des hydrocarbures, en émulsion, et contenant des tensioactifs, consiste à faire passer l'eau polluée dans une cuve (1) entre des électrodes (3, 4), le passage du courant déstabilisant les liens entre les tensioactifs et les molécules d'huile, permettant ainsi aux molécules d'huile d'affleurer à la surface. La couche d'huile (5) flottant à la surface de l'eau est évacuée par un orifice (7), alors que l'eau débarrassée de l'huile est soutirée à un niveau inférieur par une bouche d'évacuation (6). L'eau ainsi épurée débouche dans un premier compartiment (11). Elle passe ensuite, par un passage situé au bas de ce compartiment (16) dans un second compartiment aval (13). L'eau épurée est ensuite évacuée par un déversoir (2) qui a la forme d'un orifice de hauteur réglable.

## Description

### Domaine technique

La présente invention appartient au domaine du traitement des eaux usées, et plus particulièrement à celui de l'épuration des eaux polluées par des émulsions d'huiles et d'eau, notamment d'hydrocarbures et d'eau, émulsions dont la constitution est favorisée par la présence de tensioactifs contenus dans les détergents utilisés au cours de processus de nettoyage. Le domaine d'application privilégié est celui des eaux usées de garages, après nettoyage de véhicules automobiles.

### Technique antérieure

Le traitement des eaux polluées par des émulsions d'huile et d'eau, et notamment d'hydrocarbures, a fait l'objet de diverses applications de techniques variées.

Une technique efficace est celle du passage des eaux usées dans un lit de bactéries. Ce traitement biologique a la particularité d'être applicable à la quasi-totalité des pollutions, et convient notamment à l'épuration d'eaux polluées par des hydrocarbures. Il présente cependant l'inconvénient d'un prix relativement élevé.

Le procédé de floculation, dans lequel on coagule les polluants, ce qui donne des boues que l'on incinère généralement, est efficace mais son bilan économique et écologique est mauvais.

Quant au procédé de l'ultrafiltration, il est mal adapté et d'un entretien délicat.

La présente invention vise à fournir un procédé et un appareil simple, avec un bilan écologique aussi favorable que celui des installations biologiques, mais meilleur marché. Le procédé et l'appareil sont spécialement adaptés aux garages.

### Exposé de l'invention

L'invention consiste d'abord en un procédé d'épuration d'eau polluée par de l'huile, et notamment par des hydrocarbures, en émulsion, et contenant des tensioactifs, dans lequel l'eau polluée est amenée à passer entre, ou autour de, au moins deux électrodes (3, 4) de pôles opposés, la durée du passage de ladite eau polluée entre lesdites électrodes ou autour de celles-ci ainsi que la tension, l'intensité du courant et la distance entre les électrodes étant telles que le champ électrique déstabilise les liens entre les tensioactifs et les molécules d'huile, les molécules d'huile ainsi dégagées étant amenées à la surface des eaux traitées, l'eau ainsi traitée étant soutirée au-dessous du niveau de la couche d'huile (5) et ladite couche d'huile étant évacuée.

Dans une première forme d'exécution du procédé, la tension, l'intensité du courant et la distance entre les électrodes sont telles que le passage du courant dans l'eau à traiter provoque une électrolyse partielle et par conséquent un dégagement de bulles d'oxygène et d'hydrogène qui forment un courant ascendant propre à entraîner à la surface les molécules d'huile.

Dans une deuxième forme d'exécution du procédé, qui est aussi applicable à la précédente, l'intensité du courant est de 5 ampères au moins.

Dans une troisième forme d'exécution du procédé, qui est aussi applicable aux précédentes, la distance les électrodes est comprise entre 5 et 30 mm.

Dans une quatrième forme d'exécution du procédé, qui est aussi applicable aux précédentes, l'électrode négative est constituée en tout ou en partie de métal.

Dans une cinquième forme d'exécution du procédé, qui est aussi applicable aux précédentes, l'électrode positive est constituée en tout ou en partie de polyester et de carbone.

Dans une sixième forme d'exécution, qui est aussi applicable aux précédentes, le procédé est appliqué à des eaux provenant du nettoyage de véhicules automobiles.

L'invention consiste ensuite en un appareil d'épuration d'eau polluée par de l'huile, et notamment par des hydrocarbures, en émulsion, destiné à l'application d'un procédé selon la description, dans sa forme générale aussi bien que dans ses formes d'exécution particulières mentionnées ci-dessus, qui comprend au moins une cuve (1), apte à recevoir l'eau polluée, au moins deux électrodes (3, 4), dont au moins une a un pôle opposé à celui de la ou des autres, et placées de façon à être au moins partiellement plongées dans l'eau polluée lorsque celle-ci remplit au moins partiellement la cuve, au moins une paroi (8) non horizontale apte à guider le courant d'eau entre les électrodes ou autour de celles-ci, au moins une bouche d'évacuation (6) de l'eau après son passage entre les électrodes ou autour de celles-ci, et au moins un évacuateur (7) de l'huile, la bouche d'évacuation (6) étant située à un niveau inférieur à celui de l'évacuateur (7).

Dans une première forme d'exécution particulière de l'appareil, la paroi (8) de l'appareil est au moins partiellement verticale.

Dans une deuxième forme d'exécution particulière de l'appareil, applicable aussi à la première, la paroi non horizontale (8) présente une partie supérieure (26) inclinée.

Dans une troisième forme d'exécution particulière de l'appareil, applicable aussi aux précédentes, la bouche d'évacuation (6) de l'eau après son passage entre les électrodes ou autour de celles-ci débouche sur au moins un sas (10) dans lequel l'eau se déverse puis passe par au moins un déversoir (2) placé plus bas que l'évacuateur (7) de l'huile et permettant l'évacuation de l'eau épurée.

Dans une quatrième forme d'exécution particulière de l'appareil, applicable aussi aux précédentes, le déversoir (2) du sas a un seuil (9) de hauteur réglable.

Dans une cinquième forme d'exécution particulière de l'appareil, applicable aussi aux précédentes, le réglage de la hauteur du seuil (9) du déversoir (2) se fait par une plaque (17) fixée à la paroi (18) qui ferme le sas en aval, la fixation de ladite plaque à ladite paroi permettant de régler la hauteur de la plaque par rapport à la paroi, ladite plaque incluant le déversoir (2), et ladite paroi (18) présentant au moins une ouverture (19) qui coïncide au moins partiellement avec ledit déversoir dans au moins une partie des positions données à ladite plaque par rapport à ladite paroi.

Dans une sixième forme d'exécution particulière de l'appareil, applicable aussi aux précédentes, le sas (10) comprend au moins deux compartiments (11, 13) séparés l'un de l'autre part au moins une cloison non horizontale (14) dont le haut dépasse le niveau de l'eau traitée et dont le bas laisse un passage (16) situé plus bas que la bouche d'évacuation (6) et le déversoir (2) et situé entre les deux.

L'invention consiste enfin dans l'utilisation d'un procédé décrit ci-dessus, dans sa définition générale ou dans l'une ou plusieurs des ses formes d'exécution particulières, dans un appareil décrit ci-dessus, dans sa définition générale ou dans l'une ou plusieurs des ses formes d'exécution particulières.

### Description sommaire des dessins

Les dessins montrent à titre d'exemple, une forme d'exécution de l'invention, qui est la forme d'exécution préférée.

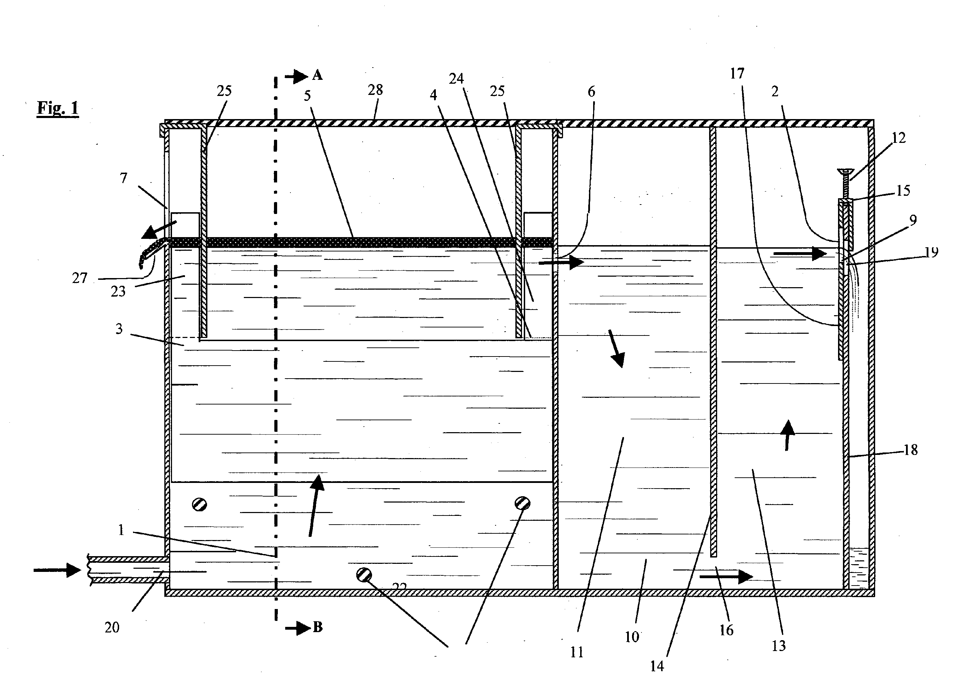

La figure 1 est une coupe verticale longitudinale d'un appareil selon l'invention. Les flèches indiquent le sens de la circulation de l'eau dans l'appareil, sauf la seule flèche qui va de droite à gauche et qui montre le sens dans lequel se déverse l'huile séparée de l'eau.

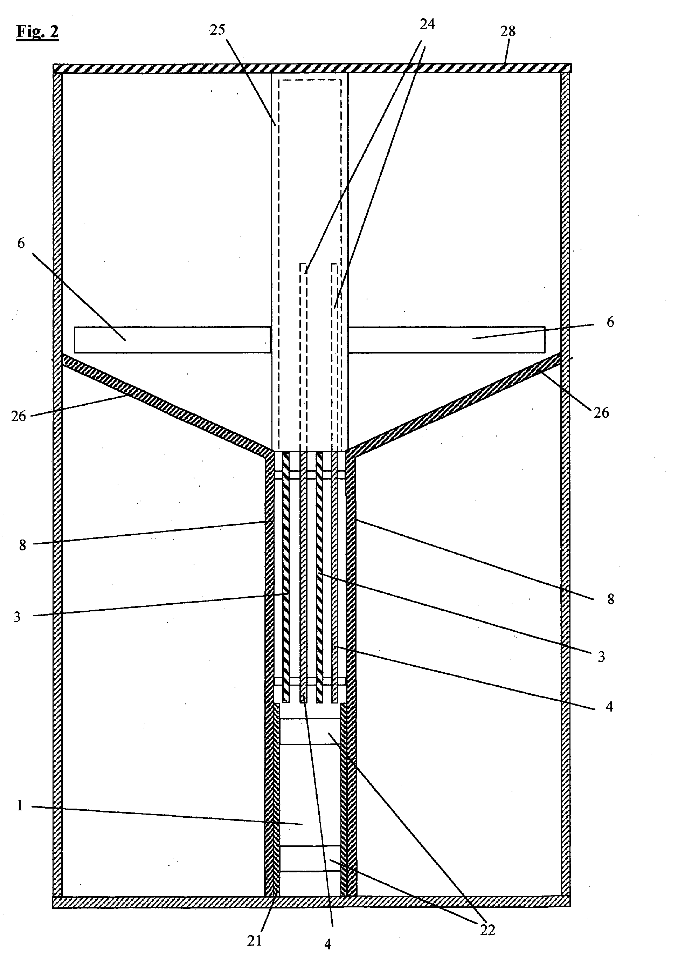

La figure 2 est une coupe transversale selon AB d'un appareil selon l'invention.

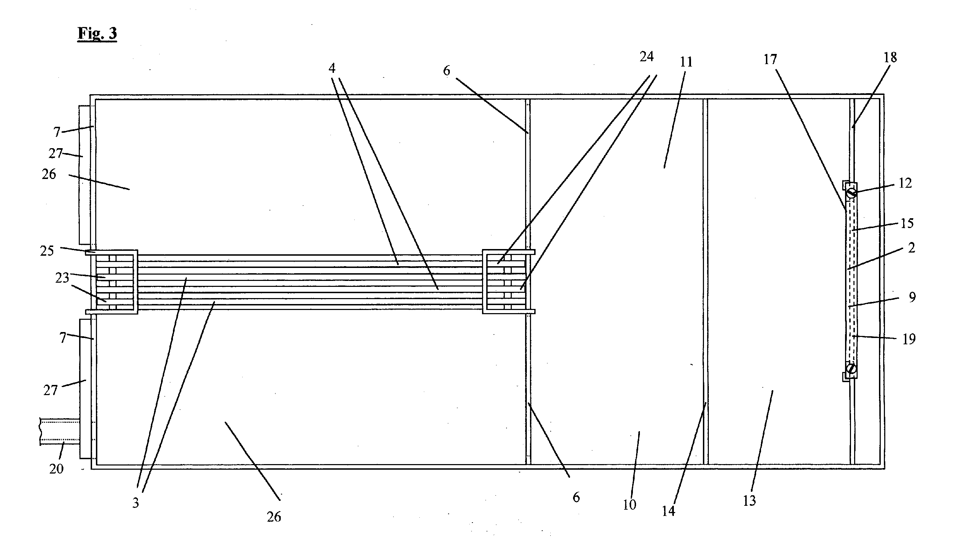

La figure 3 est une vue de dessus du d'un appareil selon l'invention, dans laquelle les sommets horizontaux des cache-connecteurs ont été supprimés pour permettre une vision plus complète des électrodes.

### Meilleure manière de réaliser l'invention

La meilleure manière de réaliser l'invention est celle qui est montrée dans les dessins.

L'appareil selon l'invention, et qui permet d'appliquer le procédé selon l'invention, comprend au moins une cuve 1 dans laquelle sont placées plusieurs électrodes 3 et 4, les électrodes 3 étant de pôle opposé à celui des électrodes 4. Les électrodes 3 alternent avec les électrodes 4 et sont placées verticalement entre deux parois verticales 8 qui les enserrent. L'eau polluée est amenée dans la cuve par le bas, au moyen d'au moins un conduit 20. L'eau polluée est guidée par les parois 8 pour monter entre les électrodes ; une petite partie de l'eau, dans la forme d'exécution présentée ici, passe entre une électrode et une paroi 8 au lieu de passer entre deux électrodes, mais cela n'a pas de conséquence pratique, l'eau étant malgré tout soumise à un champ électrique. Pendant son passage entre ou autour des électrodes, l'émulsion formée par l'eau et l'huile qui constituent l'eau polluée est soumise au courant provenant des électrodes. Ce courant a de préférence une intensité de 5 ampères au moins. La distance entre les électrodes est de préférence comprise entre 5 et 30 mm, et elle est idéalement de 8 mm. Les parois 8 sont fixées ici sur un bâti placé dans le bas de la cuve et qui est constitué essentiellement de deux parois 21 reliées par des traverses 22, les parois 8 étant fixées contre les parois 21.

Les électrodes 3 et 4 ont une forme de plaque de préférence rectangulaire surmontée d'un côté par une excroissance formant un rectangle vertical 23 ou 24 dont un long côté prolonge l'un des côtés de l'électrode qui sont contigus aux parois qui ferment la cuve transversalement au plan des électrodes. Les électrodes sont disposées parallèlement. Elles sont ici au nombre de quatre et peuvent être présentes en plus grand nombre. Les électrodes positives alternent avec les électrodes négatives. Les excroissances rectangulaires verticales 23 des électrodes d'un même pôle sont placées d'un même côté, et les excroissances rectangulaires verticales 24 des électrodes du pôle opposé sont placées du côté opposé. Cela permet de relier aisément les électrodes de même pôle à une même source de courant. Les connexions entre la source de courant et les excroissances rectangulaires verticales 23 ou 24 sont protégées par des cache-connecteurs 25, qui ont ici la forme de deux parois verticales à section horizontale en U et qui recouvrent les excroissances rectangulaires verticales 23 et 24, ainsi que les connexions électriques qui les alimentent, lesdites connexions n'étant pas représentées ici.

Les électrodes positives sont de préférence constituées en tout ou en partie de polyester et de carbone, et les électrodes négatives sont en principe métalliques, dans ce cas en aluminium.

Le passage du courant dans l'émulsion d'huile et d'eau que l'on vise à épurer, et qui contient des tensioactifs du fait qu'elle provient de nettoyages de divers appareils, et le plus souvent de véhicules automobiles, déstabilise les liaisons entre les molécules d'huile et les tensioactifs, libérant ainsi les molécules d'huile, qui, plus légères que l'eau, remontent à la surface. Ce mouvement ascendant est favorisé par la formation de bulles d'oxygène et d'hydrogène résultant de l'électrolyse d'une partie de l'eau, lesdites bulles provoquant un courant ascendant.

Les parois 8 présentent de préférence une partie supérieure 26 inclinée. De la sorte, un évasement est formé dans lequel arrive l'eau après avoir passé entre les électrodes. Cet évasement permet aux bulles d'oxygène et d'hydrogène qui se sont formées par électrolyse de se détendre, ce qui favorise leur mouvement ascendant et permet aussi aux gouttes d'huile d'arriver plus aisément à la surface. De plus, la surface étant plus grande, le film d'huile est plus mince.

La couche d'huile à la surface ne prend pas seulement la forme d'un film recouvrant la surface de l'eau, mais aussi celle d'une mousse provoquée par les bulles d'oxygène et d'hydrogène, mousse qui se superpose à la couche d'huile qui se forme à la surface de l'eau.

La production de bulles d'oxygène n'a pas seulement l'effet mécanique susmentionné, mais diminue aussi la demande chimique d'oxygène en se combinant à une partie des tensioactifs, qui précipitent ainsi au fond de la cuve et qui peuvent en être extraits de temps en temps.

Un évacuateur 7 de l'huile est placé dans la paroi transversale extérieure de la cuve, au-dessus du niveau du haut de l'évasement formé par les deux parties supérieures inclinées 26 des parois 8. Cet évacuateur 7 consiste simplement en un ou plusieurs orifices, qui présentent ici un bec verseur 27. De l'autre côté, dans la paroi transversale qui fait face au bec verseur, une bouche d'évacuation 6 de l'eau après son passage entre les électrodes est ménagée. Cette bouche d'évacuation 6 présente ici la forme de deux ouvertures rectangulaires placées horizontalement à un niveau inférieur à celui de l'évacuateur 7. Il est en effet nécessaire de soutirer l'eau épurée au-dessous de la couche 5 d'huile et de mousse qui flotte à la surface. Par la bouche d'évacuation, l'eau épurée passe dans un sas 10. Le bord du sas est plus haut que la bouche d'évacuation 6. Ce sas est divisé en au moins deux compartiments 11 et 13 séparés l'un de l'autre par au moins une cloison non horizontale 14, et de préférence verticale. Le haut de cette cloison dépasse le niveau de l'eau traitée. Un passage 16 est ménagé au bas de cette cloison, plus bas que la bouche d'évacuation 6. Le second compartiment 13, en aval, présente un déversoir 2, ménagé ici dans une plaque 17 attenante à la paroi transversale 18 qui ferme le sas. Le déversoir 2 est placé plus bas que l'évacuateur 7 de l'huile et de la mousse. Le déversoir prend ici la forme d'une ouverture rectangulaire pratiquée dans la plaque 17. La plaque 17 est fixée contre la paroi transversale 18 de façon à pouvoir coulisser verticalement par rapport à cette paroi, qui est fixe. La paroi transversale 18 présente elle-même une ouverture 19, ici rectangulaire, également placée plus bas que l'évacuateur 7 d'huile. Dans la forme d'exécution présentée ici, le seuil de l'ouverture 19 est plus bas d'environ un centimètre que le seuil de la bouche d'évacuation 6. En position basse de la plaque 17, le seuil 9 du déversoir 2 est à la même hauteur que le seuil de l'ouverture 19, ou légèrement plus haut. En position haute, le seuil 9 est plus élevé de quelques centimètres. En pareil cas, le niveau remonte aussi bien dans le sas que dans la cuve. En faisant remonter le seuil 9, on fait également remonter le niveau de l'eau dans l'ensemble de l'appareil, ce qui permet d'augmenter la hauteur qui sépare la bouche d'évacuation 6 du bas de la couche d'huile 5 qui flotte à la surface de l'eau dans la cuve 1. De la sorte, on permet également à la couche d'huile de prendre une plus grande épaisseur sans que l'huile atteigne la bouche d'évacuation 6.

A supposer qu'un peu d'huile passe malgré tout par la bouche d'évacuation 6, elle demeurerait à la surface de l'eau dans le compartiment amont 11 du sas 10, et serait empêchée de passer dans le compartiment aval 13 par la paroi 14, seule l'eau épurée passant sous la paroi par le passage 16.

La réglage de la hauteur de la plaque 17, et par conséquent du déversoir 2 et du seuil 9, se fait ici au moyen de vis 12 verticales, qui sont vissées dans un filetage pratiqué dans un rebord horizontal 15 solidaire de la plaque 17 et placé à son sommet. Ce rebord surmonte le haut de la paroi 18. La vis vient s'appuyer sur le haut de la paroi 18. Pour faire monter la plaque 17, il suffit de visser la ou les vis 12.

La forme d'exécution montrée ici n'est qu'une des formes possibles. Il est bien entendu aussi possible d'utiliser des parois 8, 14 ou 18 entièrement inclinées plutôt que verticales. Il est aussi possible d'utiliser plusieurs cuves 1, des parois plus nombreuses, notamment les parois 8 ou 14, d'avoir plusieurs sas, chacun comptant plus de deux compartiments, et d'avoir plusieurs évacuateurs, plusieurs bouches d'évacuation, plusieurs déversoirs, plusieurs conduits d'arrivée d'eau, bref de multiplier les organes, sans que de tels changements modifient le fonctionnement de l'appareil.

Dans la forme d'exécution représentée ici, l'appareil est surmonté de deux couvercles amovibles 28, par exemple en PVC transparent, de façon à permettre à l'utilisateur de voir si le processus se déroule convenablement.

### Possibilités d'application industrielle

L'appareil et le procédé peuvent être utilisés pour le traitement des eaux usées provenant notamment du nettoyage de véhicules automobiles, y compris éventuellement des aéronefs, bateaux, ou chemins de fer. Le champ d'application n'est cependant pas limité à de tels appareils, mais s'étend à toute épuration d'eau polluée par des huiles formant une émulsion grâce à la présence de tensioactifs, de telles émulsions se formant à la suite de n'importe quel nettoyage d'éléments ou d'appareils salis par des huiles.

## Revendications

1. Procédé d'épuration d'eau polluée par de l'huile, et notamment par des hydrocarbures, en émulsion, et contenant des tensioactifs, **caractérisé en ce que** l'eau polluée est amenée à passer entre, ou autour de, au moins deux électrodes (3, 4) de pôles opposés, **en ce que** la durée du passage de ladite eau polluée entre lesdites électrodes ou autour de celles-ci ainsi que la tension, l'intensité du courant et la distance entre les électrodes sont telles que le champ électrique déstabilise les liens entre les tensioactifs et les molécules d'huile, **en ce que** les molécules d'huile ainsi dégagées sont amenées à la surface des eaux traitées, **en ce que** l'eau ainsi traitée est soutirée au-dessous du niveau de la couche d'huile (5) et **en ce que** ladite couche d'huile est évacuée.

2. Procédé selon la revendication 1, **caractérisée en ce que** la tension, l'intensité du courant et la distance entre les électrodes sont telles que le passage du courant dans l'eau à traiter provoque une électrolyse partielle et par conséquent un dégagement de bulles d'oxygène et d'hydrogène qui forment un courant ascendant propre à entraîner à la surface les molécules d'huile.

3. Procédé selon l'une des revendications 1 ou 2, **caractérisé en ce que** l'intensité du courant est de 5 ampères au moins.

4. Procédé selon l'une des revendications 1 à 3, **caractérisé en ce que** la distance les électrodes est comprise entre 5 et 30 mm.

5. Procédé selon l'une des revendications 1 à 4, **caractérisé en ce que** l'électrode négative est constituée en tout ou en partie de métal.

6. Procédé selon l'une des revendications 1 à 5, **caractérisé en ce que** l'électrode positive est constituée en tout ou en partie de polyester et de carbone.

7. Procédé selon l'une des revendications 1 à 6, **caractérisé en ce qu'**il est appliqué à des eaux provenant du nettoyage de véhicules automobiles.

8. Appareil d'épuration d'eau polluée par de l'huile, et notamment par des hydrocarbures, en émulsion, destiné à l'application d'un procédé selon l'une des revendications 1 à 7, **caractérisé en ce qu'**il comprend au moins une cuve (1), apte à recevoir l'eau polluée, au moins deux électrodes (3, 4), dont au moins une a un pôle opposé à celui de la ou des autres, et placées de façon à être au moins partiellement plongées dans l'eau polluée lorsque celle-ci remplit au moins partiellement la cuve, au moins une paroi (8) non horizontale apte à guider le courant d'eau entre les électrodes ou autour de celles-ci, au moins une bouche d'évacuation (6) de l'eau après son passage entre les électrodes ou autour de celles-ci, et au moins un évacuateur (7) de l'huile, la bouche d'évacuation (6) étant située à un niveau inférieur à celui de l'évacuateur (7).

9. Appareil selon la revendication 8, **caractérisé en ce que** la paroi (8) est au moins partiellement verticale.

10. Appareil selon l'une des revendications 8 ou 9, **caractérisé en ce que** la paroi non horizontale (8) présente une partie supérieure (26) inclinée.

11. Appareil selon l'une des revendications 8 à 10, **caractérisé en ce que** la bouche d'évacuation (6) de l'eau après son passage entre les électrodes ou autour de celles-ci débouche sur au moins un sas (10) dans lequel l'eau se déverse puis passe dans au moins un déversoir (2) placé plus bas que l'évacuateur (7) de l'huile et permettant l'évacuation de l'eau épurée.

12. Appareil selon la revendication 11, **caractérisé en ce que** le déversoir (2) du sas a un seuil (9) de hauteur réglable.

13. Appareil selon la revendication 12, **caractérisé en ce que** le réglage de la hauteur du seuil (9) du déversoir (2) se fait par une plaque (17) fixée à la paroi (18) qui ferme le sas en aval, la fixation de ladite plaque à ladite paroi permettant de régler la hauteur de la plaque par rapport à la paroi, ladite plaque incluant le déversoir (2), et ladite paroi (18) présentant au moins une ouverture (19) qui coïncide au moins partiellement avec ledit déversoir dans au moins une partie des positions données à ladite plaque par rapport à ladite paroi.

14. Appareil selon l'une des revendications 10 à 13, **caractérisé en ce que** le sas (10) comprend au moins deux compartiments (11, 13) séparés l'un de l'autre part au moins une cloison non horizontale (14) dont le haut dépasse le niveau de l'eau traitée et dont le bas laisse un passage (16) situé plus bas que la bouche d'évacuation (6) et le déversoir (2) et situé entre les deux.

15. Utilisation d'un procédé selon l'une des revendications 1 à 7 dans un appareil selon l'une des revendications 8 à 14.
